# EUROPEAN PATENT APPLICATION

(11) **EP 2 565 335 A1**
(43) Date of publication of application: **06.03.2013**
(21) Application number: 11774966.3
(22) Date of filing: 25.04.2011
(51) Int. Cl.: E02F 9/26, B60K 35/00

(54) **DISPLAY DEVICE OF CONSTRUCTION MACHINE**

(30) Priority: 26.04.2010 JP 2010101196
(71) Applicant: Hitachi Construction Machinery Co., Ltd., Bunkyo-ku Tokyo 112-8563 (JP)
(72) Inventor: NAKAMURA Keiichiro, Tsuchiura-shi Ibaraki 300-0013 (JP); SHIBAMORI Kazuhiro, Tsuchiura-shi Ibaraki 300-0013 (JP); TSUKADA Hidenobu, Tsuchiura-shi Ibaraki 300-0013 (JP); ODAGIRI Kinya, Tsuchiura-shi Ibaraki 300-0013 (JP); WATANABE Yutaka, Tsuchiura-shi Ibaraki 300-0013 (JP)
(74) Representative: Beetz & Partner
(86) International application number: PCT/JP2011/060079
(87) International publication number: WO 2011/136185

(57) **Abstract**

Disclosed is a display device that includes a display unit 7 provided in a operator's seat 4 of a construction machine, an operating unit 8 with a switch 10 for operating the display unit 7, and a monitor controller 13 for controlling the display unit 7 and the operating unit 8, wherein: upon some kind of abnormality being detected by abnormality detection means for detecting abnormalities in mechanisms equipped in/on the construction machine, a warning logo corresponding to the kind of abnormality is displayed on the display unit, and a warning item for displaying information inclusive of details of the abnormality is added to a menu in a list format that contains items, each for executing a previously assigned specific function. Thus, the device improves in a degree of freedom of its configuration and enhances efficiency of information display.

## Description

### Field of the Invention

The present invention relates to a display device for construction machines, disposed in a cabin of a construction machine such as a hydraulic excavator, for making an operator recognize a variety of information.

### Background Art

Inside the cabin of a construction machine such as a hydraulic excavator, various kinds of instruments are provided to enable an operator to confirm states of the construction machine. These kinds of instruments include, for example, a coolant temperature indicator, a hydraulic fluid temperature indicator, an available-fuel level indicator, and an engine speed indicator. An hour-meter that indicates an elapsed total operation time of the construction machine, an instrument that indicates information on a gate lock lever selector position, and other information indicators may also be provided as appropriate.

In recent years, various information on a specific construction machine, including the information that the above-mentioned instruments acquire, has come to be displayed collectively on a device having some display means, such as a liquid-crystal display. During normal vehicle operation, a temperature of a coolant, a temperature of a hydraulic fluid, an available fuel level, and other information are displayed on such a display device. However, for example if an abnormality occurs in a mechanism of the construction machine, information on the occurrence of the abnormality, the kind thereof, corrective measures against the abnormality, and the like, must be displayed to notify the fullest possible details of that event to an operator.

Examples of prior art relating to such display devices for construction machines include, for example, the technique described in Patent Document 1. In the technique described therein, if an abnormality occurs in a construction machine, abnormality information associated with an alarm or warning indicating the abnormality will be displayed in one of display areas arranged in line in partitioned form at a plurality of abnormality information display regions, and then a press of any one of a plurality of buttons provided in a row in one-for-one relationship at the abnormality information display regions will display detailed information that contains details of the abnormality information.

### Related Art Literature

### Patent Documents

Patent Document 1: Japanese Patent No. 4264733

### Summary of the Invention

### Problems to be Solved by the Invention

Such a display device for construction machines is preferably as compact as possible to ensure better visibility for the operator, and with information display volumes tending to increase in recent years along with the further multifunctionalization of construction machines, there is growing necessity to display greater deals of information in limited display areas more efficiently.

The technique described in Patent Document 1, however, has had some room yet to be improved in efficiency of information display, because of there being a restriction requiring that the abnormality information display positions and the buttons for displaying detailed information be arranged in one-for-one relationship.

The present invention has been made with the above in mind, and an object of the invention is to provide a display device for a construction machine, designed to improve a degree of freedom of a configuration and to enhance efficiency of information display.

### Means for Solving the Problem

(1) In order to attain the above object, a display device for a construction machine according to an aspect of the present invention includes a display unit provided in a operator's seat of a construction machine, an operating unit with a switch for operating the display unit, and a monitor controller for controlling the display unit and the operating unit, wherein: a menu in a list format that contains items, each for executing a previously assigned specific function, is displayed on the display unit; upon some kind of abnormality being detected by abnormality detection means for detecting abnormalities in mechanisms equipped in/on the construction machine, a warning logo corresponding to the kind of abnormality is displayed on the display unit; and an item relating to the abnormality, the item being a warning item for displaying information inclusive of at least details of the abnormality, is added to the menu in the list format.

As outlined above, the display device is configured to display, on the display unit, upon an abnormality being detected by the abnormality detection means for detecting abnormalities in the mechanisms equipped in/on the construction machine, the warning logo corresponding to the kind of abnormality, and add, to the menu in which the items each for executing the previously assigned specific function are arranged in the list form, the warning item for displaying the information including at least the details of the abnormality. This configuration, therefore, enables loosening of its restrictions on layout of the operating buttons as well as on a method of display (i.e., display positions). That is to say, since the abnormality information display positions and the buttons for displaying detailed information do not need to be arranged in one-for-one relationship, this layout characteristic improves a degree of freedom of the kind and details of information, as well as layout of information items, to be displayed on the display device. Accordingly, a degree of freedom relating to the configuration of the display device improves and the efficiency of information display correspondingly improves.

(2) In above item (1), preferably the warning item is additionally displayed in an uppermost row of the menu.

(3) In addition, in item (1), upon the warning item being selected and determined, an item with the warning logo corresponding to the abnormality, the warning logo being paired with a name thereof, is preferably displayed in the list form.

(4) In above item (3), upon selection and determination of the item with the warning logo and the name thereof paired, information with corrective measures against the abnormality is preferably displayed on the display unit.

(5) Furthermore, in item (1), the display unit and the operating unit are preferably arranged separately from each other.

(6) Moreover, in item (1), the switch is preferably a rotary switch having a function that selects any one of the items upon the switch being rotated, and a function that determines the selected item upon the switch being pressed.

### Effects of the Invention

The present invention improves the device configuration in the degree of freedom and enhances the efficiency of information display.

### Brief Description of the Drawings

Fig. 1 is an external view of a hydraulic excavator shown as an example of a construction machine according to an embodiment of the present invention;
Fig. 2 is a schematic view showing a cabin interior of the hydraulic excavator;
Fig. 3 is a diagram showing schematically a system configuration as well as related configuration of a display device according to the embodiment of the present invention;
Fig. 4 is a diagram showing a basic screen displayed on a display unit during normal vehicle operation;
Fig. 5 is a diagram showing a menu screen displayed on the display unit during normal vehicle operation;
Fig. 6 is a diagram showing a basic screen displayed on the display unit during abnormal vehicle operation;
Fig. 7 is a diagram showing a menu screen displayed on the display unit during abnormal vehicle operation;
Fig. 8 is a diagram showing a warning list screen displayed on the display unit during abnormal vehicle operation;
Fig. 9 is a diagram showing a warning details screen displayed on the display unit during abnormal vehicle operation;
Fig. 10 is a diagram that shows a cursor operation on the menu screen displayed on the display unit during normal vehicle operation, the diagram indicating that function "a" has been selected;
Fig. 11 is a diagram that shows a cursor operation on the menu screen displayed on the display unit during normal vehicle operation, the diagram indicating that function "b" has been selected;
Fig. 12 is a diagram that shows a cursor operation on the menu screen displayed on the display unit during normal vehicle operation, the diagram indicating that function "f" has been selected;
Fig. 13 is a diagram that schematically shows logo display operations on the basic screen displayed on the display unit during abnormal vehicle operation;
Fig. 14 is a diagram that shows a cursor operation on the menu screen displayed on the display unit during abnormal vehicle operation, the diagram indicating that a warning item has been selected;
Fig. 15 is a tabular-format diagrammatic representation of examples of warning logos displayed on the display unit during abnormal vehicle operation;
Fig. 16 is a flowchart that shows a basic screen display process;
Fig. 17 is a flowchart that shows a menu screen display process;
Fig. 18 is a flowchart that shows a warning list display process; and
Fig. 19 is a flowchart that shows a warning details display process.

### Mode for Carrying Out the Invention

Hereunder, an embodiment of the present invention will be described referring to the accompanying drawings.

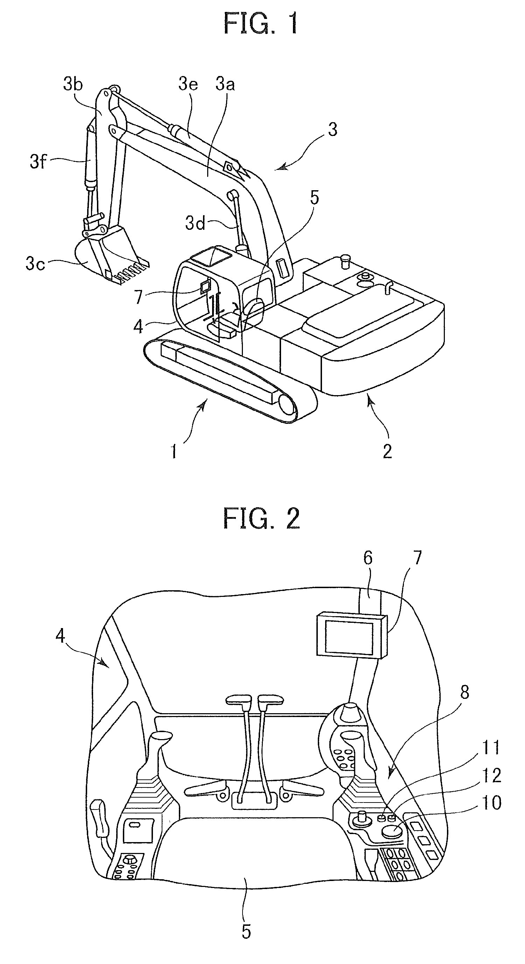

Fig. 1 is an external view of a hydraulic excavator shown as an example of a construction machine according to an embodiment of the present invention.

Referring to Fig. 1, the hydraulic excavator (construction machine) substantially includes a crawler type of lower track structure 1, an upper swing structure 2 provided pivotablly with respect to the lower track structure 1, and a front working implement 3 equipped with excavation work means and the like.

The lower track structure 1 has left and right traveling motors (not shown), the motors of which drive crawlers to rotate to make the vehicle (hydraulic excavator) travel forward or backward. The upper swing structure 2 is equipped with a cabin 4 having control devices and other elements of the hydraulic excavator 100 arranged therein (for further details of the cabin 4, see Fig. 2 that follows), such a motive power generator (not shown) as an engine, and a swinging motor (not shown). The swinging motor swings the upper track structure 2 in a rightward or leftward direction relative to the lower track structure 1. The front working implement 3 includes a boom 3a, an arm 3b, and a bucket 3c, the boom 3a being actuated vertically by a boom cylinder 3d, the arm 3b being actuated to a dumping (opening) position or a crowding (scooping/raking) position by an arm cylinder 3e, and the bucket 3c being actuated to a dumping position or a crowding position by a bucket cylinder 3f.

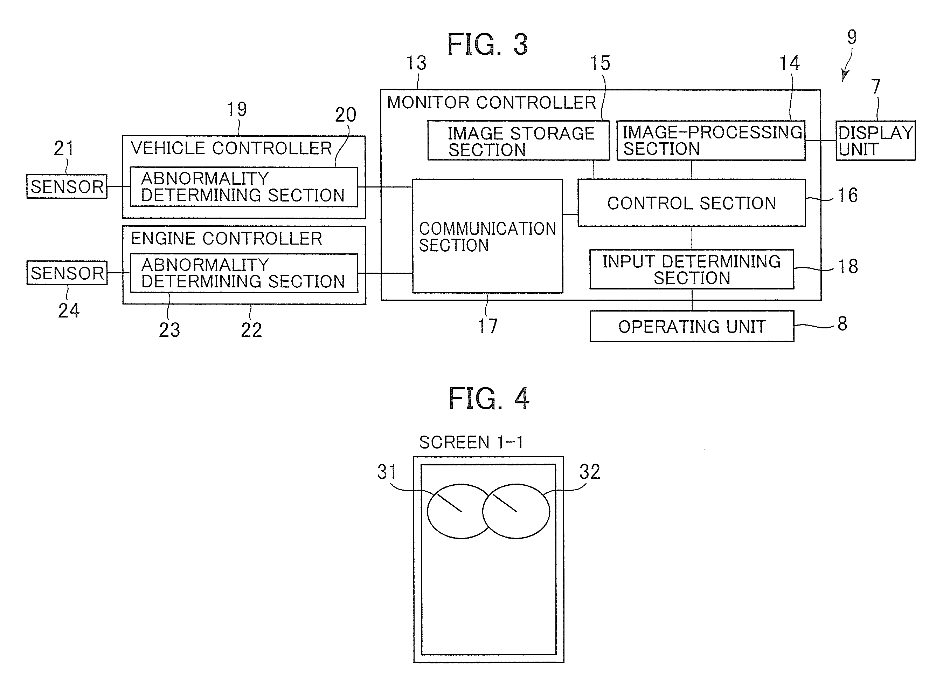

Fig. 2 is a schematic view showing the cabin interior of the hydraulic excavator, and Fig. 3 is a diagram showing schematically a system configuration as well as related configuration of a display device 9 according to the embodiment of the present invention.

Referring to Fig. 2, an operator's seat 5 on which an operator sits is provided inside the cabin 4, and around the operator's seat are provided various work control means inclusive of control levers for controlling the lower track structure 1 to make the vehicle travel, controlling the upper track structure 2 to swing the vehicle body, and controlling the front working implement 3 to excavate soil and perform other work. In addition, around the operator's seat, there are provided with a display unit 7 for displaying a variety of information about a hydraulic excavator (construction machine), which instruments have acquired, and an operating unit 8 for performing various operations. The display unit 7 and the operating unit 8, together with a monitor controller 13 (see Fig. 3) provided inside the cabin 4, constitute the display device 9 (see Fig. 3).

The display unit 7 includes a liquid-crystal display screen, for example, and during normal operation of the vehicle, displays vehicle information based on signals received from a coolant temperature indicator 31, an available-fuel level indicator 32 (see Fig. 4), a hydraulic fluid temperature indicator (not shown), an engine speed indicator (not shown), and other instruments. The display unit 7 also displays, for example, a menu screen for executing various functions. The display unit 7 is mounted on a pillar 6, for example.

The operating unit 8 is disposed at a position readily accessible from an operator seated on the operator's seat 5, includes an operating switch 10, a previous-screen display switch 11, and a basic-screen display switch 12, thereby allowing the operator to perform various operations on the display device 9. The operating switch 10 has both a function of a rotary type of switch that rotates in the rightward (clockwise) or leftward (counterclockwise) direction relative to a panel surface on which the switch is mounted, and a function of a momentary type of switch that is activated only while being pressed and/or held down. The previous-screen display switch 11 and the basic-screen display switch 12 are switches of the momentary type that are activated only while being pressed and/or held down. The operating switch 10 has a function that, upon the switch being rotated, selects an item displayed on the display unit 7, and upon the switch being pressed, determines the selected item. The previous-screen display switch 11 has a function that returns a display state of the display unit 7 to an immediately preceding screen. The basic-screen display switch 12 has a function that returns screen control to a basic screen.

Referring to Fig. 3, the display device 9 includes, in addition to the display unit 7 and the operating unit 8, the monitor controller 13 that conducts a predetermined process based on inputs from the operating unit 8 and the like, and then uses the process results to control display data/operation (and the like) of the display unit 7.

As shown in Fig. 3, the monitor controller 13 includes a control section 16 that controls the entire monitor controller 13, and a communication section 17 that conducts data communications, for example, exchanging various information by CAN (Controller Area Network) communication via a vehicle body network, between the control section 16 of the monitor controller 13 and a vehicle body controller 19, engine controller 22, and other elements provided in/on the hydraulic excavator (construction machine). The monitor controller 13 also includes an operation determining section 18 that serves as an interface to mediate a flow of operating signals from the operating unit 8 and input these signals to the control section 16, an image storage section 15 for storage of various image data to be displayed on the display unit 7, and an image-processing section 14 that displays on the display unit 7 the image data that has been sent from the control section 16.

The vehicle body controller 19 for controlling various operation of the hydraulic excavator (construction machine) includes an abnormality determining section 20 that, in accordance with information from sensors 21 provided in/on various sections of the hydraulic excavator (construction machine), determines whether an abnormality is occurring. Upon some kind of abnormality being determined to be occurring, the abnormality determining section 20 sends appropriate abnormality information (e.g., information that indicates the kind of abnormality occurring) to the monitor controller 13 via the vehicle body network or the like. Similarly, the engine controller 22 that controls operation of the engine (not shown) of the hydraulic excavator (construction machine) includes an abnormality determining section 23 that, in accordance with information from sensors 24 provided in/on various sections of the engine, determines whether an abnormality is occurring. Upon some kind of abnormality being determined to be occurring, the abnormality determining section 23 sends appropriate abnormality information to the monitor controller 13 via the vehicle body network or the like. The abnormality information that has been sent from the vehicle body controller 19, the engine controller 22, and the like to the monitor controller 13 is input to the control section 16 via the communication section 17.

In addition, various sensors (not shown) that detect a coolant temperature, an available fuel level, a hydraulic fluid temperature, an engine speed, and the like are provided in/on the hydraulic excavator (construction machine). Sensor signal information that indicates the state of the vehicle is transmitted to the sensor-associated controllers (the vehicle body controller 19, the engine controller 22, etc.), from which the information is further transferred to the communication section 17 of the monitor controller 13 via the vehicle body network or the like and then input to the control section 16.

The image storage section 15 is, for example, a read-only memory (ROM), and images relating to various sensors, images relating to the menu items, warning items, etc. described later herein, and other images are stored into the image storage section 15, for later display. The control section 16, after selecting an image based on the signal information that is input via the communication section 17 and the operation determining section 18, reads the selected image from the image storage section 15 and displays the image on the display unit 7 via the image-processing section 14.

In the above, the monitor controller 13 of the display device 9 constitutes a display control section that controls a display state of the display unit 7. Similarly, the sensors 21, the vehicle body controller 19, and the abnormality determining section 20 constitute abnormality detection means that detects abnormalities in mechanisms pertaining to the vehicle body controller 19 of the hydraulic excavator (construction machine). In addition, the sensors 24, the engine controller 22, and the abnormality determining section 23 constitute abnormality detection means that detects abnormalities in mechanisms pertaining to the engine controller 22 of the hydraulic excavator (construction machine).

The monitor controller 19, which is the display control section, has a display control function and conducts the following display process. That is to say, during normal vehicle operation, the display control function displays on the display unit 7 the various information from the instruments and other elements relating to the hydraulic excavator (construction machine), the display control function further displaying on the display unit 7, depending on an operation of the operator on the operating unit 8, a menu for operating various functions relating to the hydraulic excavator (construction machine). Upon occurrence of some kind of abnormality in any one of the mechanisms of the hydraulic excavator (construction machine) being detected by the abnormality detection means, in other words, during abnormal vehicle operation, the display control function displays on the display unit 7, in addition to the sensor information and menu displayed during normal vehicle operation, and a logo (hereinafter referred to as warning logo) denoting the occurrence of the abnormality and the particular kind of abnormality. During abnormal vehicle operation, the display control function also displays on the display unit 7, information concerning the abnormality, depending on the operation of the operator on the operating unit 8.

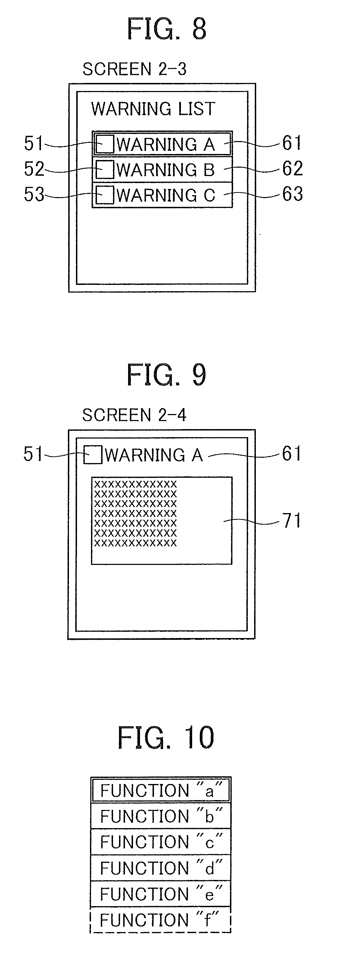

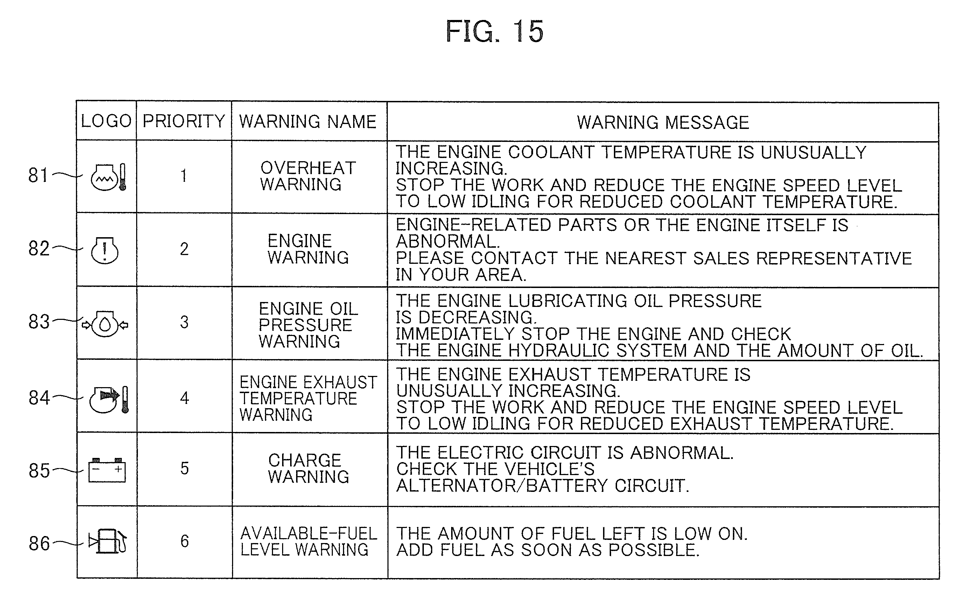

Next, the display control function in the present embodiment is described in further detail below using Figs. 4 to 15. Figs. 4 to 9 are diagrams that show examples of screens displayed on the display unit 7 of the display device 9, Figs. 10 to 14 are diagrams that illustrate cursor control operations on the display unit 7, and Fig. 15 is a diagram that shows, in a tabular format, examples of warning logos displayed on the display unit 7.

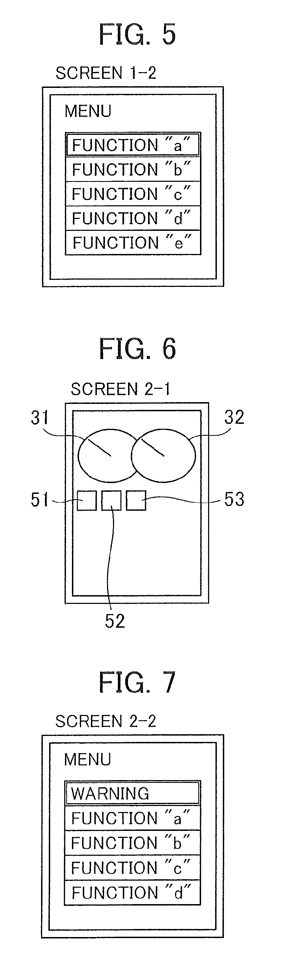

Figs. 4 and 5 are diagrams that show screens displayed on the display unit 7 during normal vehicle operation, Fig. 4 showing the basic screen (this screen may be hereinafter referred to as the on-normality basic screen) and Fig. 5 showing a menu screen (this screen may be hereinafter referred to as the on-normality menu screen).

Referring to Fig. 4, information relating to the instruments provided on the hydraulic excavator (construction machine), such as the coolant temperature indicator 31 and the available-fuel level indicator 32, is displayed on the on-normality basic screen 1-1. A press of the operating switch 10 on the on-normality basic screen 1-1 switches screen control from the basic screen 1-1 to the on-normality menu screen 1-2 shown in Fig. 5.

A plurality of (e.g., five) function items (functions "a" to "e") are displayed in a list format in a vertically arranged condition on the screen 1-2. Fig. 5 shows a state in which the item of function "a" is selected using a cursor. The cursor is initially positioned in an uppermost row (function "a") of the item list. Determining a desired function item by moving the cursor thereto using the operating unit 8 executes an appropriate one of the functions previously assigned to functions "a" to "e".

The cursor movement and function item determination on the display unit 7 are conducted by the rotational operation and press, respectively, of the operating switch 10. More specifically, when the plurality of function items are displayed in the list format in the vertically arranged condition, rotating the operating switch 10 in the rightward (clockwise) moves the cursor downward according to an amount of the rotation, or rotating the operating switch 10 in the leftward (counterclockwise) direction moves the cursor upward according to an amount of the rotation, or pressing the operating switch 10 determines the item existing at the cursor position.

A maximum number of (e.g., five) function items displayed/displayable at one time is set on the menu screen 1-2 (this number is hereinafter referred to simply as the maximum number of function items displayed). A greater number of function items than the maximum number of function items displayed may be used. If this is the case, then immediately after the display of the screen 1-2, as shown in boxed form with a dashed line in Fig. 10, a sixth function item (function "f") and subsequent ones are cleared from the screen. However, for example if the cleared function item (function "f") is selected by cursor movement after that, the item list is scrolled and the five function items including the selected function item (function "f") are displayed.

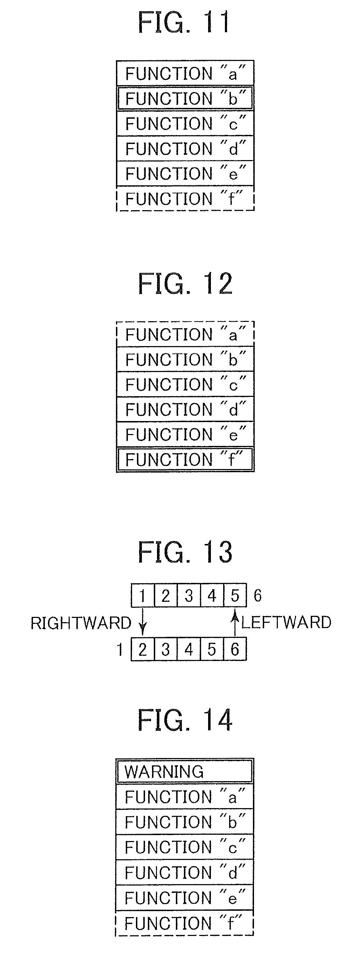

A relationship between the movement of the cursor and the display of the item list is described in further detail below with reference being made to Figs. 10 to 12. In the display state of Fig. 10, if an item to which the cursor is to be moved is displayed, as in a case where the cursor is moved from the position of function "a" to a lower position (function "b"), the display of the item list remains unchanged and the cursor only moves to that item, as shown in Fig. 11. In the display state of Fig. 10, if the item to which the cursor is to be moved is already cleared from the screen, as in a case where the cursor is moved from the position of function "e" to a lower position (function "f"), a display range is scrolled to the position of function "e" with the movement of the cursor, and the maximum number of display items, inclusive of function "e", is displayed. This condition is shown in Fig. 12.

In the display state of Fig. 10, if the cursor is moved further upward from the uppermost row of the item list, as in a case where the cursor is moved from the position of function "a" to an upper position, cursor control is transferred to a lowermost row (function "f") of the item list. At this time, if the item in the lowermost row is already cleared from the screen, as the cursor is moved, the display range changes and the maximum number of display items, inclusive of function "f" in the lowermost row, is displayed. This condition is shown in Fig. 12. In the display state of Fig. 10, if the cursor is moved further downward from the lowermost row of the item list, as in a case where the cursor is moved from the position of function "f" to a lower position, cursor control is transferred to the uppermost row (function "a") of the item list. At this time, if the item in the uppermost row is already cleared from the screen, as the cursor is moved, the display range changes and the maximum number of display items, inclusive of function "a" in the uppermost row, is displayed. This condition is shown in Fig. 10.

A press of the previous-screen display switch 11 on the menu screen 1-2 returns the screen of the display unit 7 to the basic screen 1-1, the immediately preceding screen. A press of the basic-screen display switch 12 likewise returns the screen of the display unit 7 to the basic screen 1-1.

Figs. 6 to 9 are diagrams that show screens displayed on the display unit 7 during abnormal vehicle operation, Fig. 6 showing a corresponding basic screen (on-abnormality basic screen), Fig. 7 showing a corresponding menu screen (on-abnormality menu screen), Fig. 8 showing a warning list screen, and Fig. 9 showing a warning details screen. In the present embodiment, three examples of abnormality display are described below.

Referring to Fig. 6, in addition to information displayed during abnormal vehicle operation in relation to the instruments provided on the hydraulic excavator (construction machine), such as the coolant temperature indicator 31 and the available-fuel level indicator 32, warning logos 51 to 53 each for notifying the occurrence of an abnormality and the kind of abnormality to the operator are displayed for each abnormality, on the on-abnormality basic screen 2-1. On the display unit 7, the warning logos 51 to 53 are arranged transversely in line at positions that ensure operator's visibility of the various information displayed on the screen. A priority level based on details of the corresponding abnormality is previously assigned to each warning logo, and the warning logos are arranged in order from left with one of a highest priority level first.

A maximum number of (e.g., five) warning logos displayed/displayable at one time is set on the menu screen 2-1 (this number is hereinafter referred to simply as the maximum number of warning logos displayed). A greater number of warning logos than the maximum number of warning logos displayed may be used. If this is the case, then immediately after the display of the screen 2-1, as shown in Fig. 13, while the first to fifth of the warning logos are each displayed in boxed form with a solid line in an upper row, sixth and subsequent warning logos are cleared from the screen. As the operating switch 10 is rotated in the rightward direction after that, however, the cleared sixth and subsequent warning logos, that is, lower-priority warning logos located more to the right, are displayed in order, as shown in a lower row. If any cleared warning logos are present at higher-priority (leftward) number positions, as the operating switch 10 is rotated in the leftward direction, the warning logos of the higher-priority levels are displayed in order, as shown in the upper row.

When the operating switch 10 in the operating unit 8 is pressed with the on-abnormality basic screen 2-1 displayed, control is switched from the basic screen 2-1 to the on-abnormality menu screen 2-2 shown in Fig. 7. On the screen 2-2, a warning item and a plurality of (e.g., four) function items (functions "a" to "d") are displayed in a vertically arranged condition in a list format, the warning item being additionally displayed in an uppermost row of the item list. Fig. 7 shows a state in which the warning item in the uppermost row of the item list is selected using the cursor (this position is an initial position of the cursor on the screen 2-2). Determining a desired item by moving the cursor thereto using the operating unit 8 displays a warning list (described later) or executes an appropriate one of the functions previously assigned to functions "a" to "d".

On the menu screen 2-2, as on the on-normality menu screen 1-2, a maximum number of (e.g., five) items displayed/displayable at one time is set (this number is hereinafter referred to simply as the maximum number of items displayed). A greater number of items than the maximum number of items displayed may be used. If this is the case, then immediately after the display of the screen 2-2, as shown in boxed form with a dashed line in Fig. 14, sixth and subsequent items (functions "e", "f") are cleared from the screen. However, if the cleared items (functions "e", "f") are selected by cursor movement after that, the item list is scrolled and the five items including the selected items (functions "e", "f") are displayed.

A press of the previous-screen display switch 11 on the menu screen 2-2 returns the screen of the display unit 7 to the basic screen 2-1, the immediately preceding screen. A press of the basic-screen display switch 12 likewise returns the screen of the display unit 7 to the basic screen 2-1.

Upon the warning item at the cursor being determined by a press of the operating switch 10 on the menu screen 2-2, control is switched from the menu screen 2-2 to the warning list screen (screen 2-3) shown in Fig. 8. On the screen 2-3, warning items A to C corresponding to the warning logos 51 to 53 shown on the basic screen 2-1 are displayed in a vertically arranged condition in a list form. As described previously, each warning logo is pre-assigned a priority level based on details of the corresponding abnormality, and the warning logos are arranged in order from top with one of the highest priority level first. Fig. 8 shows a state in which warning item A is selected using the cursor. Each item on the screen 2-3 is composed of one of the warning logos 51 to 53 displayed on the basic screen 2-1, and one of warning names 61 to 63. Determining a desired item by moving the cursor thereto using the operating unit 8 displays the details of the warning.

A maximum number of (e.g., five) items displayed/displayable at one time is also set on the warning list screen 2-3 (this number is hereinafter referred to simply as the maximum number of items displayed). As on the on-normality menu screen 1-2, a greater number of items than the maximum number of items displayed may be used. If this is the case, then immediately after the display of the screen 2-3, sixth and subsequent items are cleared from the screen. However, if the cleared items are selected by cursor movement after that, the item list is scrolled and the five items including the selected items are displayed.

A press of the previous-screen display switch 11 on the warning list screen 2-3 returns the screen of the display unit 7 to the menu screen 2-2, the immediately preceding screen. A press of the basic-screen display switch 12 likewise returns the screen of the display unit 7 to the basic screen 2-1.

Upon a desired warning item at the cursor being determined by a press of the operating switch 10 on the warning list screen 2-3, control is switched from the warning list 2-3 to the warning details screen (screen 2-4) shown in Fig. 9. Fig. 9 shows the screen 2-4 displayed immediately after warning A has been determined on the warning list screen 2-3. The warning logo 51, warning name 61 (warning A), and warning message 71 relating to the item which was determined on the warning list screen 2-3 are displayed on the screen 2-4. Details of the currently occurring abnormality, corrective measures against the abnormality, and other information are displayed as the warning message 71.

A press of the previous-screen display switch 11 on the warning details screen 2-4 returns the screen of the display unit 7 to the warning list screen 2-3, the immediately preceding screen. A press of the basic-screen display switch 12 likewise returns the screen of the display unit 7 to the basic screen 2-1.

Next, further details of the various information which will be displayed on the display unit if abnormalities relating to the hydraulic excavator (construction machine) are detected, are described below with reference being made to Fig. 15. Fig. 15 is a tabular-format diagrammatic representation of examples of warning logos corresponding to detected abnormalities, warning names indicated by the warning logos, priorities assigned to the logos, and corrective measures.

### (Warning logo 81)

Warning logo 81 is used upon detection of an unusual increase in engine coolant temperature.
Warning name: Overheat Warning
Priority: 1
Warning message: The engine coolant temperature is increasing. Stop the work and reduce the engine speed level to low idling for reduced coolant temperature.

### (Warning logo 82)

Warning logo 82 is used upon detection of an engine-related abnormality.
Warning name: Engine Warning
Priority: 2
Warning message: Engine-related parts or the engine itself is abnormal. Please contact the nearest sales representative in your area.

### (Warning logo 83)

Warning logo 83 is used upon detection of an unusual decrease in engine lubricating oil pressure.
Warning name: Engine Oil Pressure Warning
Priority: 3
Warning message: The engine lubricating oil pressure is decreasing. Immediately stop the engine and check the engine hydraulic system and the amount of oil.

### (Warning logo 84)

Warning logo 84 is used upon detection of an unusual increase in engine exhaust temperature.
Warning name: Engine Exhaust Temperature Warning
Priority: 4
Warning message: The engine exhaust temperature is unusually increasing. Stop the work and reduce the engine speed level to low idling for reduced exhaust temperature.

### (Warning logo 85)

Warning logo 85 is used upon detection of an abnormality in an electric circuit.
Warning name: Charge Warning
Priority: 5
Warning message: The electric circuit is abnormal. Check the vehicle's alternator/battery circuit.

### (Warning logo 86)

Warning logo 86 is used upon detection of an unusual decrease in available fuel level.
Warning name: Available-Fuel Level Warning
Priority: 6
Warning message: The amount of fuel left is decreasing. Add fuel as soon as possible.

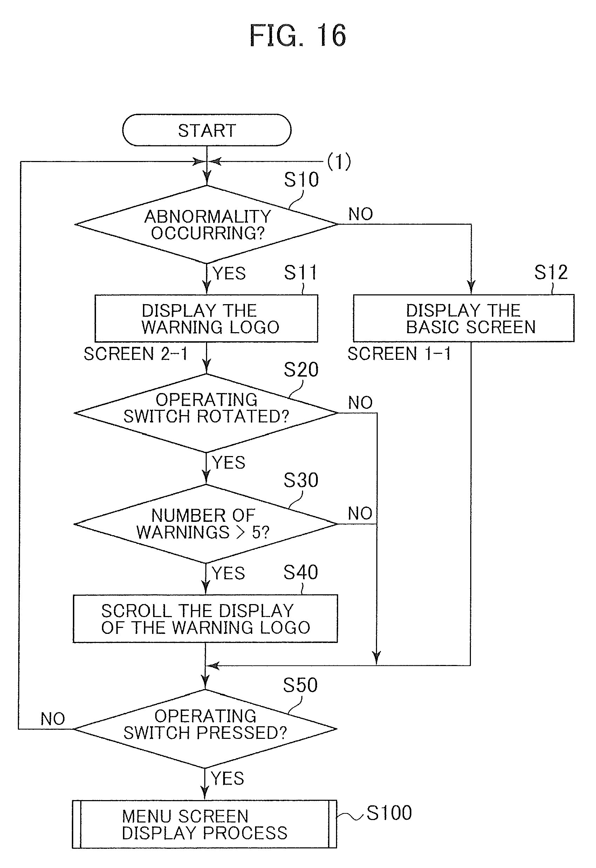

Details of display processes are described below using flowcharts of Figs. 16 to 19.

Fig. 16 is a flowchart that shows a basic screen display process. Referring to Fig. 16, the control section 16 first executes step S10 to determine whether an abnormality is occurring, that is, whether an abnormality has been detected, and then if determination results are NO, the control section 16 displays the basic screen 1-1 in step S12. Next, the control section 16 executes step S50 to determine whether the operating switch 10 has been pressed, and if determination results are YES, the control section 16 displays a menu screen in step S100. If the determination results are NO, the control section 16 returns to step S10 without taking any action. If determination results in step S10 are YES, the control section 16 displays the warning logo based on abnormality information, as the screen 2-1 in Fig. 6, in step S11, and after this, executes steps S20 and S30 to determine whether the operating switch 10 has been rotated and whether more than five warnings (warning logos) are displayed, respectively. If determination results in both of steps S20, S30 are YES, the control section 16 scrolls the display of each warning logo in step S40, and after determining in step S70 whether the operating switch 10 has been pressed, if determination results are YES, displays a menu screen in step S100, or if the determination results are NO, returns to step S10 without taking no action. If the determination results in both of steps S20, S30 are NO, the control section 16 executes step S50 to determine whether the operating switch 10 has been pressed, and if determination results are YES, displays a menu screen in step S100, or if the determination results are NO, returns to step S10 without taking no action.

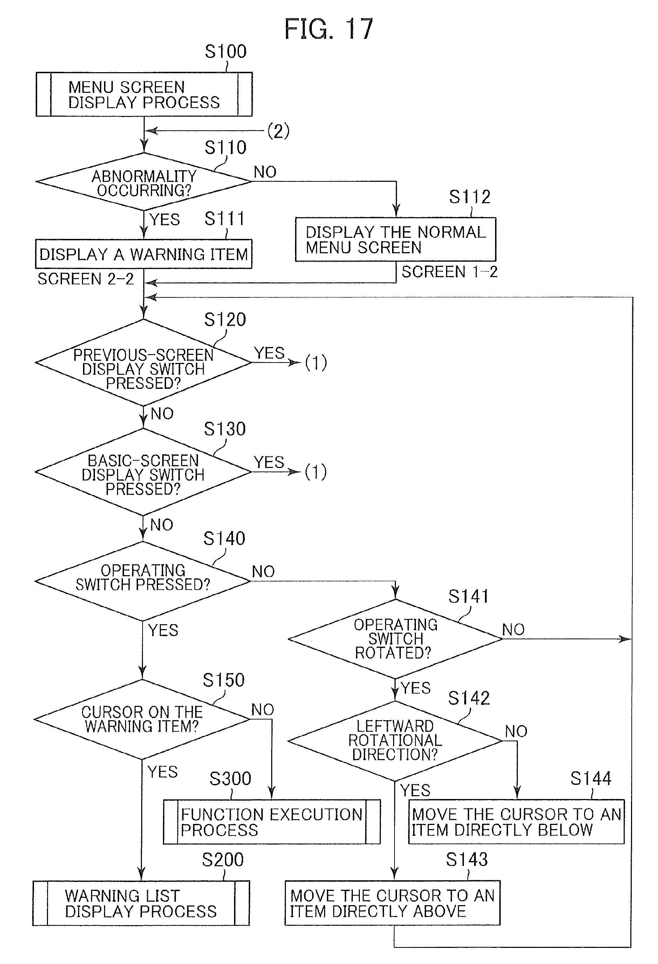

Fig. 17 is a flowchart that shows a menu screen display process. As shown in Fig. 17, in the menu screen display process (step S100), the control section 16 first executes step S110 to determine whether an abnormality is occurring, that is, whether an abnormality has been detected, and then if determination results are YES, the control section 16 displays a warning item, as the screen 2-2 in Fig. 7, in step S111, or if the determination results are NO, displays the on-normality basic screen, as the screen 1-2 in Fig. 5, in step S112. Next, the control section 16 executes steps S120 and S130 to determine whether the previous-screen display switch 11 has been pressed and whether the basic-screen display switch 12 has been pressed, respectively, and then if determination results in both of steps S120, S130 are NO, the control section 16 executes steps S140 and S150 to determine whether the operating switch 10 has been pressed and whether the cursor is present on the warning item, respectively. If determination results in both of steps S140, S150 are YES, the control section 16 displays the warning list screen in step S200. If the determination results in both of steps S120, S130 are YES, the control section 16 returns to step S10 of Fig. 16 without taking any action. If the determination results in step S140 are NO, the control section 16 executes step S141 to determine whether the operating switch 10 has been rotated, and then if determination results are NO, returns to step S120 without taking any action. If the determination results in step S141 are YES, the control section 16 executes step S142 to determine whether the rotational direction of the operating switch 10 is leftward, then if determination results are YES (leftward rotation), moves the cursor to an item directly above, in step S143, or if the determination results are NO (rightward rotation), moves the cursor to an item directly below, in step S144, and returns to step S120. If the determination results in step S150 are NO, the control section 16 executes the function item at the cursor position in step S300.

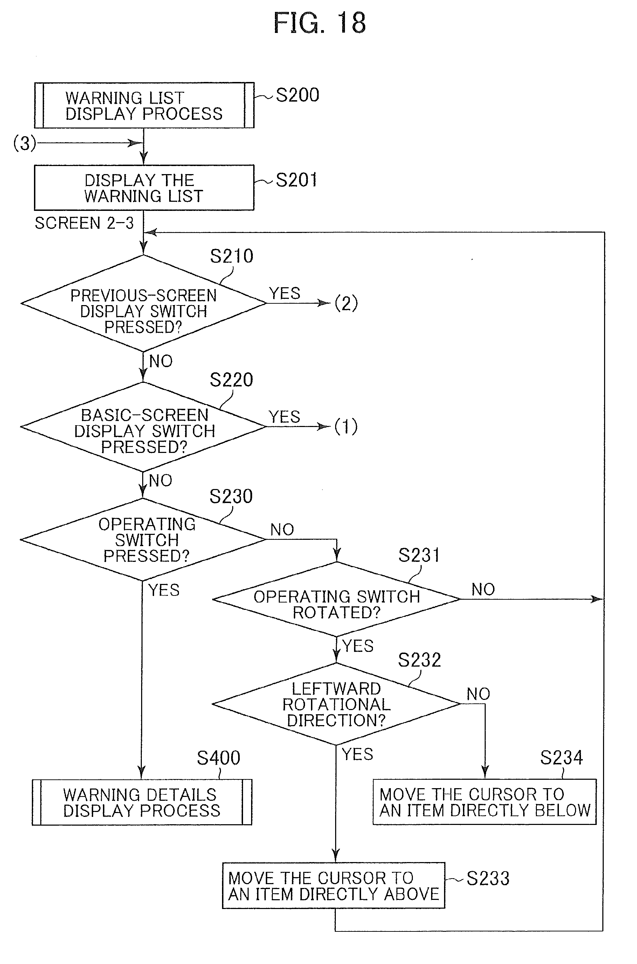

Fig. 18 is a flowchart that shows a warning list display process. As shown in Fig. 18, in the warning list display process (step S200), the control section 16 first displays the warning list (screen 2-3) in step S201. After this, the control section 16 executes steps S210 and S220 to determine whether the previous-screen display switch 11 has been pressed and whether the basic-screen display switch 12 has been pressed, respectively, then if determination results in both of steps S210, S220 are NO, the control section 16 executes step S230 to determine whether the operating switch 10 has been pressed, and if determination results are YES, displays the warning details screen in step S400. If the determination results in step S210 are YES, the control section 16 returns to step S110 in Fig. 17 without taking any action, or if the determination results in step S220 are YES, the control section 16 returns to step S10 of Fig. 16 without taking any action. If the determination results in step S230 are NO, the control section 16 executes step S231 to determine whether the operating switch 10 has been rotated, and then if determination results are NO, the control section 16 returns to step S210 without taking any action. If the determination results in step S231 are YES, the control section 16 executes step S232 to determine whether the rotational direction of the operating switch 10 is leftward, then if determination results are YES (leftward rotation), moves the cursor to an item directly above, in step S233, or if the determination results are NO (rightward rotation), moves the cursor to an item directly below, in step S234, and returns to step S210.

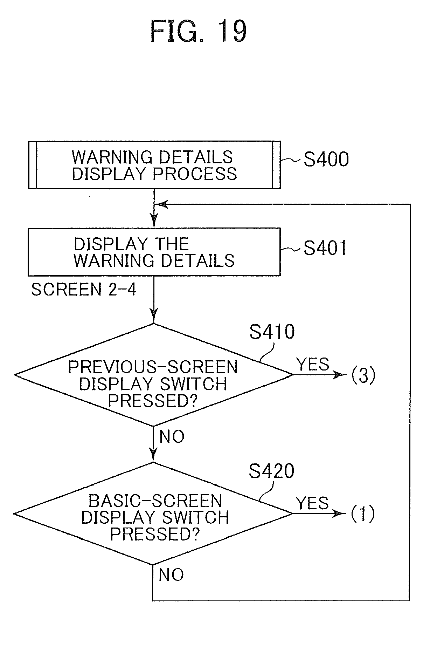

Fig. 19 is a flowchart that shows a warning details display process. As shown in Fig. 19, in the warning details display process (step S400), the control section 16 first displays the warning details screen 2-4 in step S401. After this, the control section 16 executes steps S410 and S420 to determine whether the previous-screen display switch 11 has been pressed and whether the basic-screen display switch 12 has been pressed, respectively, and then if determination results in both of steps S410, S420 are NO, the control section 16 returns to step S401 without taking any action. If the determination results in step S410 are YES, the control section 16 returns to step S201 of Fig. 18 without taking any action, and if the determination results in step S220 are YES, returns to step S10 of Fig. 16 without taking any action.

Next, operation of the display device 9 in the present embodiment having the above configuration will be described.

Display control during normal vehicle operation is first described below.

In step S12 of Fig. 16, during normal vehicle operation, the instruments that the construction machine (hydraulic excavator) has are displayed on the basic screen 1-1 displayed on the display unit 7 of the display device 9. Upon the operator pressing the operating switch 10, the menu screen 1-2 is displayed in step S112 of Fig. 17. Next, the operator moves the cursor to a desired function item on the function item list by rotating the operating switch 10 (steps S141 to S144). A press of the operating switch under that state executes the desired function (step S300 in Fig. 17). Alternatively a press of the previous-screen display switch 11 or the basic-screen display switch 12 independently of the cursor position returns screen control to the basic screen (step S120 or S130, respectively, in Fig. 17).

Display control during abnormal vehicle operation is next described below. Three examples, each of detecting the Overheat Warning, the Engine Warning, or the Engine Oil Pressure Warning, are shown in the description.

In step S12 of Fig. 16, on the basic screen 2-1 displayed on the display unit 7 of the display device 9 during abnormal vehicle operation, warning logos are displayed in accordance with the previously assigned priority levels, in addition to the instruments of the construction machine (hydraulic excavator). That is to say, the warning logos 81 to 83 shown in Fig. 15 are displayed at the display positions of the warning logos 51 to 53 on the basic screen 2-1 of Fig. 6. If the number of warning logos is greater than the maximum number of (e.g., five) warning logos displayable at one time, the operator can scroll the display of the sixth and subsequent warning logos by rotating the operating switch 10 (steps S20 to S40 in Fig. 16).

Upon the operator pressing the operating switch 10 under that state, the menu screen 2-2 with a warning item displayed in the uppermost row is displayed and the cursor is placed at its initial position, that is, on the display position of the warning item in the uppermost row of the list, in step S111 of Fig. 17. A press of the operating switch 10 under this state displays the warning list screen 2-3. After moving the cursor to a desired item on the function item list by rotating the operating switch 10 on the menu screen 2-2 (steps S140 to S144 in Fig. 17), pressing the operating switch 10 with the cursor placed on that function item executes the desired function (step S300 in Fig. 17). Pressing the operating switch 10 after returning the cursor to the warning item, likewise displays the warning list screen 2-3 (step S200 in Fig. 17). Alternatively, pressing either the previous-screen display switch 11 or the basic-screen display switch 12 on the menu screen 2-2, independently of the cursor position, returns screen control to the basic screen (step S120 or S130, respectively, in Fig. 17).

On the warning list screen 2-3, warning items are displayed in accordance with the previously assigned priority levels (step S201). That is to say, the warning names of Overheat Warning, Engine Warning, and Engine Oil Pressure Warning shown in Fig. 15 are displayed at the display positions of the warning names 61 to 63, respectively, on the warning screen 2-3 of Fig. 8. After moving the cursor to a desired item on the warning item list by rotating the operating switch 10 (steps S230 to S234 in Fig. 18), pressing the operating switch 10 with the cursor placed on that warning item displays the desired warning details shown in the screen 2-4 (step S400 in Fig. 18). For example, if warning A 61 (Overheat Warning) is selected, the warning logo 81 and Overheat Warning are displayed at the display positions of the warning logo 51 and warning name 61, respectively, on the warning details screen 2-4. In addition, the warning message 71 of "The engine coolant temperature is increasing. Stop the work and reduce the engine speed level to low idling for reduced coolant temperature." is displayed as further detailed information. The operator, by reading the warning message 71, can confirm the details of the abnormality and the necessary corrective measures against the abnormality, thus appropriately correcting the abnormality occurring in the construction machine (hydraulic excavator).

On the warning list screen 2-3, a press of the previous-screen display switch 11 returns screen control to the immediately preceding menu screen independently of the cursor position (step S210 in Fig. 18), or a press of the basic-screen display switch 12 returns screen control to the basic screen independently of the cursor position (step S220 in Fig. 18). In addition, on the warning details display screen 2-4, a press of the previous-screen display switch 11 returns screen control to the immediately preceding menu screen independently of the cursor position (step S410 in Fig. 19), or a press of the basic-screen display switch 12 returns screen control to the basic screen independently of the cursor position (step S420 in Fig. 19).

Next, beneficial effects of the present embodiment having the above configuration will be described.

As in the prior art described in Patent Document 1, in a display device designed so that abnormality information display positions and the buttons for displaying the details of abnormality information (detailed abnormality information) must be arranged in one-for-one relationship, device-configurational restrictions on the layout of operating buttons as well as on a method of display (i.e., display positions) has left some room to be improved in the efficiency of information display, in terms of displaying a greater amount of information more efficiently in a limited area.

In contrast to this, in the present embodiment, upon an abnormality being detected by the abnormality detection means for detecting abnormalities in the mechanisms equipped in the construction machine, a warning logo corresponding to the kind of abnormality which has been detected is displayed on the display unit and the warning items for displaying at least the information including the details of the abnormality are added to the menu in a list format that represents the items for executing previously assigned functions. This loosens any device-configurational restrictions on the layout of operating buttons as well as on a method of display (i.e., display positions). In other words, since abnormality information display positions and the buttons for displaying detailed abnormality information do not need to be arranged in one-for-one relationship, this layout characteristic improves a degree of freedom of the kind and details of information, as well as the layout of information items, to be displayed on the display device. Accordingly, a degree of freedom relating to the configuration of the display device improves and the efficiency of information display correspondingly improves.

In addition, the operating switch used in the operating unit has both the function of the rotary type of switch that rotates in the rightward (clockwise) and leftward (counterclockwise) directions relative to the panel surface on which the switch is mounted, and the function of the momentary type of switch that is activated only while being pressed and/or held down. Compared with the prior-art device, therefore, the device of the present embodiment is reduced in the number of buttons and hence in the number of parts used.

Furthermore, the use of one switch alone enables the selection and determination of menu items, thus improving operational convenience.

Moreover, since a warning item is additionally displayed in the uppermost row of an item list that is the initial position of the cursor, detailed information on the abnormality of the highest priority can be displayed just by pressing the operating switch 11, thereby to improve operational convenience.

While the operating unit and display unit of the display device in the present embodiment are arranged separately from each other, this arrangement is not restrictive and the operating unit and the display unit may be formed into an integrated type of structure, for example.

Besides, while the operating unit used in the operating unit is constructed to have both the function of the rotary type of switch that rotates, and the function of the momentary type of switch, this construction is not restrictive and for example, a switch having the function of the rotary type of switch that rotates, and a switch having the function of the momentary type of switch may be provided independently and the two switches may be operated in combination.

### Description of Reference Numbers

- 1: Lower track structure
- 2: Upper track structure
- 3: Front working implement
- 4: Cabin
- 5: Operator's seat
- 6: Pillar
- 7: Display unit
- 8: Operating unit
- 9: Display device
- 10: Operating switch
- 11: Previous-screen display switch
- 12: Basic-screen display switch
- 13: Monitor controller
- 14: Image-processing section
- 15: Image storage section
- 16: Control section
- 17: Communication section
- 18: Input determining section
- 19: Vehicle body controller
- 20: Abnormality determining section
- 21: Sensor
- 22: Engine controller
- 23: Abnormality determining section
- 24: Sensor
- 31: Coolant temperature indicator
- 32: Available-fuel level indicator
- 51-53: Warning logos
- 61-63: Warning names
- 71: Warning message
- 81-86: Warning logos

## Claims

1. A display device for a construction machine, comprising:
a display unit (7) provided in a operator's seat (4) of a construction machine,;
an operating unit (8) with switches (10, 11, 12) for operating the display unit; and
a monitor controller (13) for controlling the display unit and the operating unit;
wherein:
a menu in a list format that contains items, each for executing a previously assigned specific function, is displayed on the display unit;
upon some kind of abnormality being detected by abnormality detection means (20, 23) for detecting abnormalities in mechanisms equipped in/on the construction machine, a warning logo (51, 52, 53) corresponding to the kind of abnormality is displayed on the display unit, and an item relating to the abnormality, the item being a warning item for displaying information inclusive of at least details of the abnormality, is added to the menu in the list format.

2. The display device for a construction machine according to claim 1, wherein:
the warning item is additionally displayed in an uppermost row of the menu.

3. The display device for a construction machine according to claim 1, wherein:
upon the warning item being selected and determined, an item with the warning logo (51, 52, 53) corresponding to the abnormality, the warning logo (51, 52, 53) being paired with a name (61, 62, 63) thereof, is displayed in the list form.

4. The display device for a construction machine according to claim 3, wherein:
upon selection and determination of the item with the warning logo (51, 52, 53) and the name thereof (61, 62, 63) paired, information (71) with corrective measures against the abnormality is displayed on the display unit (7).

5. The display device for a construction machine according to claim 1, wherein:
the display unit and the operating unit are arranged separately from each other.

6. The display device for a construction machine according to claim 1, wherein:
one of the switches, that is, the switch (10) is a rotary switch having a function that selects any one of the items upon the switch being rotated, and a function that determines the selected item upon the switch being pressed.
